# EUROPÄISCHE PATENTSCHRIFT

(11) **EP 0 509 348 B1**
(45) Veröffentlichungstag und Bekanntmachung des Hinweises auf die Patenterteilung: **12.07.1995**
(21) Anmeldenummer: 92105810.3
(22) Anmeldetag: 03.04.1992
(51) Int. Cl.: H02H 7/12

(54) **Verfahren zum Schutz eines nach dem Phasenanschnittprinzip gesteuerten elektrischen Verbrauchers und Anordnung zur Durchführung des Verfahrens**
Procedure for the protection of an electrical sink, controlled by the principle of phase-angle control and equipment for executing the procedure
Procédé pour la protection d'un dissipateur régulé à principe de réglage de phase et dispositif pour l'exécution de ce procédé

(30) Priorität: 08.04.1991 DE 4111336
(43) Veröffentlichungstag der Anmeldung: 21.10.1992
(73) Patentinhaber: SIEMENS AKTIENGESELLSCHAFT, 80333 München (DE)
(72) Erfinder: Draxelmayr, Dieter, Dr. Dipl.-Ing., A-9500 Villach (AT); Fischer, Klaus, Dipl.-Ing., W-8068 Pfaffenhofen (DE); Wiedenbauer, Otto, Dipl.-Ing., A-9500 Villach (AT)

(56) Entgegenhaltungen:
- DE-A- 3 119 794
- DE-A- 4 019 592
- ELEKTRONIK, Nr. 4, 22. Februar 1985, W. FRANK "Phasenanschnitt-steuerungen-problembezogen" Seiten 86-90
- BAUTEILE REPORT SIEMENS, 15. Jahrgang, Nr. 5, Oktober 1977, MANFRED KERN et al."Schaltung des Tages" Seiten 168-170

## Beschreibung

### Verfahren zum Schutz eines nach dem Phanenanschnittprinzip gesteuerten elektrischen Verbrauchers und Anordnung zur Durchführung des Verfahrens

Die Erfindung betrifft ein verfahren zum Schutz eines nach dem Phasenanschnittprinzip gesteuerten elektrischen Verbrauchers nach dem Oberbegriff des Patentanspruchs 1 sowie eine Anordnung zur Durchführung des Verfahrens nach dem Oberbegriff des Patentanspruchs 9.

Zur stufenlosen Steuerung elektrischer Verbraucher nach dem Phasenanschnittprinzip sind prinzipiell Vorrichtungen bekannt, beispielsweise aus dem Artikel von Kern/Strehle, 8136 Bauteile-Report Siemens, Jahrgang 15/Nr. 5 (1977.10), S. 168-170. Solche Vorrichtungen weisen üblicherweise im Hauptstromweg ein Halbleiterschaltelement, beispielsweise einen Triac auf. Dieses Halbleiterschaltelement wird durch Ansteuersignale, beispielsweise Zündimpulse, angesteuert, so daß der Strom im Hauptstromweg bzw. der Ausgangsstrom dieser Steuervorrichtung in Abhängigkeit vom Phasenwinkel des Ansteuersignals bzw. Zündimpulses steuerbar ist. Der Hauptstromweg wird dabei üblicherweise durch die Serienschaltung eines elektrischen Verbrauchers als Last und des Halbleiterschaltelements gebildet, die von zwei Leitern eines Leitungsnetzes gespeist wird. Zwischen einem Phasenleiter und einem Mittelpunktsleiter eines 380 Volt-Drehstromnetzes liegt beispielsweise eine Netzspannung von 220 V. Anstelle eines Triacs als Halbleiterschaltelement ist bei einer Helligkeitssteuerungsschaltung für Glühlampen auch ein selbstsperrender Feldeffekttransistor bekannt.

Wenn der elektrische Verbraucher, der von einer solchen Vorrichtung angesteuert wird, eine andere Betriebsspannung aufweist als die Netzspannung, von der die Steuervorrichtung gespeist wird, so kann zum Umsetzen der Spannung ein Transformator vorgesehen sein. Bei solchen Schaltungen speist die Steuervorrichtung die Primärwicklung des Transformators so, als ob die Primärwicklung die Last darstellen würde. Im Sekundärkreis dieses Transformators ist dann der eigentliche, mit einer anderen Betriebsspannung betriebene Verbraucher angeordnet. Ein solcher Verbraucher kann beispielsweise eine Halogenlampe sein, die mit Niederspannung betrieben wird und aus einem öffentlichen Netz mit beispielsweise 220 V Wechselspannung über einen Transformator gespeist wird und von einer Steuervorrichtung stufenlos steuerbar ist. Bei ordnungsgemäß funktionierender Lampe stellt eine Schaltungsanordnung, bestehend aus einer Lampe im Sekundärkreis eines Transformators und der Primärwicklung dieses Transformators als Last für die Steuervorrichtung, eine nahezu ohmsche Last dar. Spannung und Strom sind in Phase, ein Betrieb mit konventionellen oben beschriebenen Steuervorrichtungen ist somit möglich. Gleiches gilt für rein ohmsche Verbraucher.

Bei induktiven Verbrauchern, beispielsweise einem Motor oder bei einer oben beschriebenen Halogenlampe mit Transformator, bei dem die Halogenlampe ausgefallen ist, kann es zu Störungen kommen. In Abhängigkeit vom Durchschaltzeitpunkt der Steuervorrichtung kann ein sehr hoher Magnetisierungsstrom im Transformator bzw. induktiven Verbraucher fließen. Bei wiederholtem Auftreten, beispielsweise infolge mehrerer aufeinanderfolgender Ansteuersignale am Leistungsschalter, kann dadurch unter anderem der Transformator bzw. induktive Verbraucher zerstört werden.

Wenn aufgrund eines ungünstigen Zündzeitpunktes bei der Aufmagnetisierung der Transformatorkern magnetisch gesättigt ist, führt dies infolge der dann nur noch ohmschen Last der Wicklung zu Stromspitzen, insbesondere, wenn die Sekundärwicklung leerläuft. Auch dadurch kann der Transformator zerstört werden. Solche Störungen werden von bekannten Vorrichtungen zur Steuerung einer elektrischen Last zumindest dann, wenn diese in Zweidraht-Technik arbeitet, nicht mit ausreichender Sicherheit verhindert.

Aus der Veröffentlichung W. Frank "Phasenanschnittsteuerungen - problembezogen", Elektronik Nr. 4, 1985, S. 86-90, sind Phasenanschnittsteuerungen für induktive Lasten bekannt, die den im elektrischen Verbraucher fließenden Strom detektieren und bei Überschreiten eines zulässigen Maximalstroms den Stromflußwinkel auf ungefährliche Werte reduzieren. Eine derartige Schutzschaltung reagiert allerdings bei ungünstigem Stromführungswinkel im Störfall nicht immer zuverlässig. Eine zuverlässige Schaltung enthält eine Schmelzesicherung, die bei einem Ausfall des Verbrauchers, beispielsweise der Halogenlampe, jeweils ausgetauscht werden muß, so daß eine solche Schaltung sehr unkomfortabel ist. Aus der genannten Veröffentlichung ist auch bekannt, eine Nachzündautomatik mit einer einstellbaren Nachzündrate vorzusehen.

Alle beschriebenen Vorrichtungen zur Verhinderung von Störungen aufgrund zu großer Ströme, die durch eine induktive Last oder eine ohmisch-induktive Last hervorgerufen werden, haben gemeinsam, daß sie erst ein weiteres Ansteuern der Last verhindern, wenn zumindest kurzzeitig ein zu großer Strom fließt. Damit verbunden sind Störungen der Funktion der Last, beispielsweise Dunkelzeiten bei Halogenlampen. Bei kurzen Störungen, beispielsweise einem unzulässig hohen Strom nur in einer Halbwelle, was üblicherweise noch nicht zur Zerstörung von Bauelementen führt, oder Netzkurzausfällen müssen auf diese Weise Nachteile in der Funktion des Verbrauchers in Kauf genommen werden, um den Verbraucher bei ungünstigeren Fehlerzuständen sicher zu schützen.

Der Erfindung liegt die Aufgabe zugrunde, eine verbesserte Möglichkeit zum Schutz eines elektrischen Verbrauchers und seiner Steuervorrichtung gegen unzulässige Betriebszustände vorzusehen. Der Erfindung liegt weiterhin die Aufgabe zugrunde, eine Möglichkeit anzugeben, den elektrischen Verbraucher und die Steuervorrichtung fehlertolerant zu betreiben.

Diese Aufgabe wird durch ein Verfahren mit den Merkmalen des Patentanspruchs 1 gelöst. Weiterhin wird die Aufgabe durch eine Anordnung mit den Merkmalen des Patentanspruchs 10 gelöst.

Die Erfindung geht von der Überlegung aus, daß kurzzeitig auftretende Fehlerzustände für die Ansteuerschaltung tolerierbar sein sollen, während bei gehäuftem Auftreten von Fehlern eine zuverlässige Abschaltung vorgesehen werden muß. Mit den Merkmalen des Gegenstands der Erfindung ergibt sich der Vorteil, daß Fehlerzustände erkannt und mit Referenzzuständen verglichen werden und daß bei Überschreiten eines vorgegebenen Werts eines aus dem Vergleich erzeugten Signals ein Abschalten der Ansteuerschaltung erfolgt. Auf diese Weise lassen sich die Fehlerzustände "Nichtdurchschalten des Halbleiterschaltelements in einer Halbwelle" sowie "Mehrfach-Ansteuersignale bzw. ausbleibende Ansteuersignale pro Halbwelle" erfassen. Auf diese Weise führt stationärer Halbwellenbetrieb und damit thermische Überlastung der Verbraucher zur Abschaltung. Die Erfindung eignet sich für den Einsatz im Zweileiterbetrieb, so daß eine erfindungsgemäße Anordnung gegen herkömmliche Schalter austauschbar ist. Weiterhin ermöglicht es die Erfindung, in derselben Konfiguration, d.h. Beschaltung, sowohl Glühlampen als auch Niedervolthalogenlampen über Netztrafo zu dimmen.

Ausgestaltungen der Erfindung sind in Unteransprüchen gekennzeichnet.

Nachfolgend wird die Erfindung anhand von in den Figuren der Zeichnung dargestellten Ausführungsbeispielen näher erläutert. Gleiche Elemente sind in den Figuren mit gleichen Bezugszeichen versehen. Es zeigen:
- Figur 1: ein Prinzipschaltbild einer erfindungsgemäßen Anordnung,
- Figur 2: eine Anordnung mit Zwischenspeicher und Ansteuersignal-Wiederholung,
- Figur 3: eine Anordnung mit Halbwellenvergleichseinrichtung und Bewertungseinrichtung.

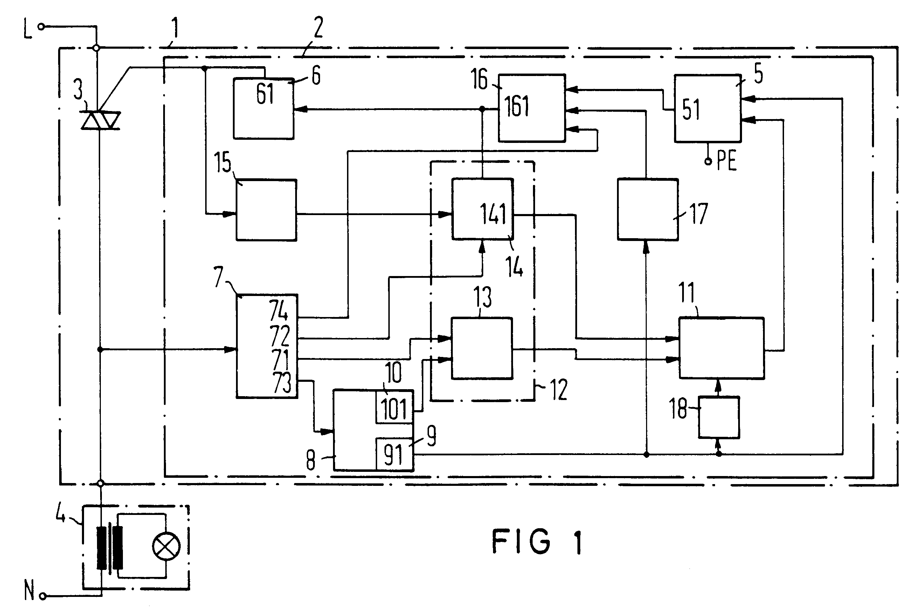

Zur Erläuterung des erfindungsgemäßen Verfahrens dient die erfindungsgemäße Anordnung gemäß Figur 1. Das Blockschaltbild zeigt eine Steuervorrichtung 1 mit einer Ansteuerschaltung 2 für ein Halbleiterschaltelement 3. In Reihe zur Steuervorrichtung 1 ist ein zu steuernder elektrischer Verbraucher 4 geschaltet. Im Ausführungsbeispiel enthält der elektrische Verbraucher einen Transformator, dessen Primärwicklung in Serie zur Steuervorrichtung 1 liegt und an dessen Sekundärwicklung beispielsweise eine Halogenlampe angeschlossen ist. Die Serienschaltung aus Steuervorrichtung 1 und elektrischem Verbraucher 4 wird von einer Spannungsquelle gespeist, die durch die Klemmen L eines Phasenleiters und N eines Mittelpunktsleiters eines öffentlichen Netzes symbolisch dargestellt ist. Die Speisespannung beträgt beispielsweise 220 V Wechselspannung.

Gemäß Figur 1 ist als Halbleiterschaltelement 3 ein Triac vorgesehen, der von einer Einrichtung zur Erzeugung von Ansteuersignalen 5 und einer nachgeschalteten Ansteuersignal-Ausgangsstufe 6 durchschaltbar, d.h. zündbar ist. Der Zustand des Lastkreises, der durch den Triac 3 und die Last 4 gegeben ist, wird bezüglich des Laststroms bzw. der Spannung am Triac 3 mit Hilfe eines Detektors 7 überwacht. Das Durchzünden des Triacs 3 kann mit Hilfe einer Spannungsmessung zwischen den beiden Anodenanschlüssen des Triacs erfaßt werden. Im leitenden Zustand beträgt die Spannung an den beiden Anodenanschlüssen weniger als 2 V, bei nichtdurchgeschaltetem Zustand ist die Spannung wesentlich höher. Ähnlich läßt sich der Laststrom erfassen, der üblicherweise mit Hilfe eines Widerstands in eine Spannungsmessung übersetzt wird. Derartige Überwachungs- bzw. Erfassungseinrichtungen wie der Detektor 7 sind bekannt, beispielsweise aus der oben erwähnten Veröffentlichtung von W. Frank. An einem Ausgang 71 des Detektors 7 steht dann ein Überwachungssignal für den durchgezündeten Triac 3, an einem Ausgang 72 ein demgegenüber invertiertes Signal für den nicht gezündeten Triac und an einem Ausgang 74 ein Überwachungssignal, das dem Stromnulldurchgang des Laststroms entspricht. Vom Detektor 7 wird an einem Ausgang 73 ein weiteres Überwachungssignal abgenommen, das einer Netz-Synchronisiereinrichtung 8 zugeführt wird.

Aufgabe der Netz-Synchronisiereinrichtung 8 ist es, die Ansteuerschaltung 2 auf das Netz zu synchronisieren, so daß sich das Verhalten der Ansteuerschaltung unabhängig von der Netzfrequenz steuern läßt. Auf diese Weise sind beispielsweise bezüglich der beiden Netzhalbwellen streng symmetrische Ansteuersignale erzeugbar. Weiterhin lassen sich Störüberlagerungen, z.B. durch Rundsteuerimpulse, ausmitteln, und kurze Netzausfälle sowie ein stark induktiver Stromfluß können erkannt werden. Die Netz-Synchronisiereinrichtung 8 enthält eine Einrichtung zur Erzeugung von Ansteuer-Referenzsignalen 9, die an einem Ausgang 91 bereitgestellt werden. Weiterhin enthält die Netz-Synchronisiereinrichtung 8 einen Polaritätsdetektor 10, der an seinem Ausgang 101 ein Polaritäts-Referenzsignal erzeugt, das der Polarität einer an dem Triac 3 anliegenden Spannung zugeordnet ist. Dieses Polaritätssignal ist damit abhängig von der momentanen Polarität der zu steuernden Versorgungsspannung des elektrischen Verbrauchers 4. Der Polaritätsdetektor 10 ist beispielsweise durch einen Schmitt-Trigger realisierbar. Damit bei durchgeschaltetem Halbleiterschaltelement 3 die vorher detektierte Information jeweils am Schmitt-Triggerausgang erhalten bleibt, ist eine Hysterese erforderlich.

Die Einrichtung zur Erzeugung von Ansteuer-Referenzsignalen 9 ermittelt die Ansteuer-Referenzsignale in Abhängigkeit von einer vorgewählten Größe, wie z.B. der Leistung eines Motors oder der Helligkeit einer Lampe und in Abhängigkeit von der durch die Wechselspannungsquelle bereitgestellten Versorgungsspannung. An ihrem Ausgang 91 liegen dann Ansteuer-Referenzsignale mit einem bestimmten Ansteuerwinkel, bezogen auf den Nulldurchgang der Versorgungsspannung, sozusagen als Vorschlag für das Ansteuersignal des Triacs 3. Die Einrichtung zur Erzeugung von Ansteuer-Referenzsignalen 9 kann gemäß dem Stand der Technik, beispielsweise mit Hilfe einer Phasenregelschleife, einer sogenannten PLL ausgebildet sein, die die Phaseninformation der zu schaltenden Wechselspannung nachbildet und dann den Phasenanschnittwinkel in Abhängigkeit von bestimmten Parametern steuert. Hierbei wird insbesondere Bezug genommen auf die nicht vorveröffentlichte Patentanmeldung DE 40 12 255.

Die Ansteuerschaltung erzeugt in Abhängigkeit von einem Durchschalten des Triacs 3 nach einem am Ausgang 61 der Ansteuer-Ausgangsstufe 6 erzeugten Ansteuersignal Überwachungssignale mit Hilfe des Detektors 7. Die Überwachungssignale an den Ausgängen 71 und 72 des Detektors 7 werden mit Hilfe einer Fehlerdetektoreinrichtung 12 weiterverarbeitet, die bei Vorliegen mindestens eines gegebenen Fehlerkriteriums Fehlersignale erzeugt.

Bei manchen Verbrauchern 4, Halbleiterschaltelementen 3 oder bestimmten Netzbedingungen kann es vorkommen, daß das Halbleiterschaltelement trotz korrektem Ansteuersignal nicht durchschaltet. Ist beispielsweise die Niedervolthalogenlampe einer Last 4 ausgefallen und läuft der Transformator im Leerlauf, so herrschen bei den meisten Transformatoren induktive Lastverhältnisse mit einem langsamen Stromanstieg und einer über den Spannungsnulldurchgang verlängerten Stromflußzeit. Durch den langsamen Stromanstieg ergibt sich eine Zündunsymmetrie und der Triac 3 kann nicht oder nur in einer Halbwelle zünden. Gemäß Figur 1 ist dann vorgesehen, zumindest einen weiteren Zündimpuls mit Hilfe der Einrichtung zur Erzeugung eines Ansteuer-Wiederholsignals 14 auszusenden, um den Triac 3 doch noch in den leitenden Zustand zu bringen. Als Kriterium für diesen Fehlerzustand dient eine anliegende Spannung am Triac 3 während einer kurzen Zeit nach Aussenden eines Ansteuersignals. Gemäß einer vorteilhaften Ausführung der Erfindung ist vorgesehen, daß bei Nichtzünden des Triacs nur ein weiteres Ansteuer-Wiederholsignal ausgesendet wird, unabhängig davon, ob dieses Ansteuer-Wiederholsignal den Triac dann zündet oder nicht. Zwar läßt sich die Anzahl der Wiederholsignale erhöhen, dies bedeutet aber einen erhöhten Anstieg des Stromverbrauchs. Die Erzeugung eines Ansteuer-Wiederholsignals wird am Ausgang 141 der Einrichtung zur Erzeugung eines Ansteuer-Wiederholsignals durch ein Fehlersignal angezeigt.

Die Feststellung, ob nach einem Ansteuersignal am Ausgang 61 der Ansteuer-Ausgangsstufe 6 ein Ansteuer-Wiederholsignal erzeugt werden muß, erfolgt mit Hilfe der Spannungsabtastung durch den Detektor 7 und einer Verzögerungseinrichtung 15, die zwischen den Ausgangsanschluß 61 und die Einrichtung zur Erzeugung eines Ansteuer-Wiederholsignals 14 geschaltet ist. Typische Wartezeiten für die Verzögerungseinrichtung 15 sind 1 bis 1,5 ms.

Die oben erläuterte stark verlängerte Stromflußzeit bei leerlaufender Last 4 gehört zu den Zuständen einer Phasenanschnittsteuerung, die absolut unerwünscht sind, weil sie z.B. zu thermischer Überlastung führen können. Während also ein sogenannter stationärer Halbwellenbetrieb nicht zulässig ist, ist ein singulärer Halbwellenbetrieb meistens tolerierbar. Mit Hilfe einer Halbwellenvergleichseinrichtung 13, die von einem Überwachungsausgang 71 des Detektors 7 und einem Ausgang 101 des Polaritätsdetektors 10 gesteuert wird, wird ein Halbwellenfehlersignal erzeugt. Dabei wird mit Hilfe des vom Polaritätsdetektor 10 gelieferten Polaritäts-Referenzsignals festgestellt, wenn sich innerhalb zweier aufeinanderfolgender Ansteuersignale die Polarität der zu steuernden Versorgungsspannung nicht ändert oder wenn sich die Polarität dieser Versorgungsspannung zweimal ändert.

Die mit Hilfe der Fehlerdetektoreinrichtung 12 erzeugbaren Fehlschalt-Fehlersignale der Einrichtung zur Erzeugung von Ansteuer-Wiederholsignalen 14 und die Halbwellen-Fehlersignale der Halbwellenvergleichseinrichtung 13 werden einer Bewertungseinrichtung 11 zugeführt, die gemäß Figur 1 als Aufwärts-Abwärts-Zähler ausgeführt ist. Die Fehlersignale steuern den Aufwärtseingang der Bewertungseinrichtung 11. Der Abwärts-Zähleingang der Bewertungseinrichtung 11 wird über einen Bewerter für Ansteuer-Referenzsignale 18, der als Teiler ausgeführt ist, von der Einrichtung zur Erzeugung von Ansteuer-Referenzsignalen 9 bzw. den Ansteuer-Referenzsignalen gesteuert.

Die Bewertungseinrichtung 11 hat die Aufgabe, das korrekte Funktionieren der Ansteuerschaltung 2 zu beurteilen. Dabei sollen einzelne Fehlersignale auch aufgrund kurzzeitiger Störungen registriert werden, ohne daß die Schaltung darauf reagiert, um auf diese Weise einen möglichst flackerfreien Betrieb an der Last zu erreichen. Die Bewertungseinrichtung 11 soll erst reagieren, wenn die Fehler sich zu einem vorgegebenen Wert häufen.

Die Bewertungseinrichtung 11 zählt deshalb mit jedem von der Fehlerdetektoreinrichtung 12 erzeugten Fehlersignal in eine Aufwärtsrichtung des Zählers 11, während die den Rückwärtszähleingang steuernden Ansteuer-Referenzsignale den Zähler 11 mit einer anderen, konstanten Zählrate zurückzählen. Im normalen Betriebszustand überwiegt die Rückzählrate, so daß der Zähler keine hohen Zählwerte erreicht. Treten dagegen viele Fehler auf, zählt der Zähler 11 immer höher, bis eine vorgegebene obere Zählgrenze erreicht wird. Das Erreichen dieser Zählgrenze wird dann als endgültiges Fehlerkriterium angesehen, um die Ansteuerschaltung 2 abzuschalten.

In einem bevorzugten Ausführungsbeispiel schaltet die Ansteuerschaltung beim Zählerstand 15 des von der Bewertungseinrichtung 11 erzeugten Bewertungssignals ab. Auf diese Weise verhindert die Ansteuerschaltung mehr als 15 unsymmetrische Halbwellen mit hohen Sättigungsströmen und damit eine Überlastung des Lasttransformators. Mit Hilfe des Bewerters für Ansteuer-Referenzsignale 18 wird der Zählerstand periodisch nach einer gewissen Anzahl Halbwellen um 1 zurückgesetzt bzw. gelöscht bei einem Ein- oder Ausschalten der Ansteuerschaltung oder einem Netzausfall.

Wie bereits mit Bezug auf die Halbwellenvergleichseinrichtung erläutert, führen induktive Lastverhältnisse, wie beispielsweise bei leerlaufendem Transformator, zu einer über den Netzspannungsnulldurchgang verlängerten Stromflußzeit. Ein zwischen dem Netzspannungsnulldurchgang und dem Stromnulldurchgang erfolgendes Ansteuersignal für den Triac 3 bleibt deshalb unwirksam, da der Triac ja noch leitet. Dieser Betriebszustand führt in der Regel zu kräftigen Stromspitzen mit entsprechender Leistungsaufnahme und ist deshalb unerwünscht. Im Rahmen der Erfindung ist deshalb vorgesehen, in einem derartigen Betriebszustand die Ansteuersignale bzw. Zündimpulse für den Triac 3 solange zwischenzuspeichern, bis der Stromnulldurchgang erfolgt und wieder Spannung am Triac liegt. Auf diese Weise wird der unsymmetrische Halbwellenbetrieb vermieden, ohne daß es nach dem erfindungsgemäßen Verfahren zur Abschaltung der Ansteuerschaltung kommt.

Zum Zweck der Zwischenspeicherung ist der Ansteuersignal-Ausgangsstufe ein Zwischenspeicher 16 vorgeschaltet, dessen Ausgang 161 ebenso wie ein Ausgang der Einrichtung zur Erzeugung von Ansteuer-Wiederholsignalen 14 zur Ansteuersignal-Ausgangsstufe führt. Der Zwischenspeicher 16 wird einerseits gesteuert von einem Ausgang 74 des Detektors 7, mit dem ein Stromnulldurchgang am Triac 3 erfaßt wird. Ein anderer Eingang des Zwischenspeichers 16 wird von einem Ausgang 51 der Einrichtung zur Erzeugung von Ansteuersignalen 5 gesteuert.

Die Einrichtung zur Erzeugung von Ansteuersignalen 5 ist eingangsseitig mit der Einrichtung zur Ansteuer-Referenzsignalen 9 und dem Ausgang der Bewertungseinrichtung 11 verbunden. Weiterhin kann ein Parametereingang PE vorgesehen sein. Die Einrichtung zur Erzeugung von Ansteuersignalen ermittelt aus den eingangsseitig anliegenden Ansteuer-Referenzsignalen, gegebenenfalls unter Berücksichtigung weiterer Parameter für die Berechnung des Zündimpulswinkels das für den Triac 3 vorgesehene Ansteuersignal. Die Einrichtungen 5 und 9 können auch zusammengefaßt sein. Im Fall einer durch die Bewertungseinrichtung 11 ausgelösten Abschaltung der Ansteuerschaltung wird die Einrichtung zur Erzeugung von Ansteuersignalen 5 deaktiviert.

Der Zwischenspeicher 16 weist einen dritten Eingang auf, der von einer Zwischenspeicher-Deaktiviereinrichtung 17 gesteuert wird. Eingangssignale der Zwischenspeicher-Deaktiviereinrichtung 17 bilden die von der Einrichtung 9 erzeugten Ansteuer-Referenzsignale. Der Einsatz einer Zwischenspeicher-Deaktiviereinrichtung ist zweckmäßig, weil sich bei Verwendung eines Zwischenspeichers aufgrund kurzzeitiger Störungen ein stabiler Betrieb mit maximaler Ausgangsleistung an der Last einstellen kann. Dieser Zustand, der für die Funktion der Phasenanschnittsteuerung unerwünscht ist, kann im Prinzip nur durch Ausschalten der Ansteuerschaltung behoben werden. Im Rahmen der Erfindung ist deshalb vorgesehen, daß der Speicherbetrieb von Zeit zu Zeit unterbrochen wird, damit sich in jedem Fall wieder normale Verhältnisse einstellen können, ohne daß es zur Ausschaltung der Ansteuerschaltung kommt. Dabei kann es zweckmäßig sein, jeweils nach drei Ansteuer-Referenzsignalen den Speicher zu deaktivieren.

Es erweist sich als zweckmäßig, die in der Figur 1 dargestellten Funktionselemente als digital arbeitende Elemente zu realisieren, wobei ein Taktsystem erforderlich ist, das in der Netz-Synchronisiereinrichtung 8 enthalten ist. Dieses Taktsystem hat die Aufgabe, beim Einschalten für definierte Zustände der Elemente zu sorgen, um einen regulären Betrieb zu ermöglichen, sowie während der Betriebs und nach einer Abschaltung der Ansteuerschaltung in einem Fehlerfall die für die Verzögerungs- und Speichereinrichtungen notwendigen Reset-Signale zu erzeugen. Vorausgesetzt ist dabei, daß die erforderliche Zeitverzögerungs- bzw. Speichereinrichtung mit Zählern zusammenwirken, die als Zeitbasen dienen. Bei einem derartigen digitalen Aufbau der Ansteuerschaltung können die Zähler- bzw. Teilerraten weitgehend flexibel eingestellt werden, je nachdem, welchem Parameter für die Funktion der Steuervorrichtung 1 mehr Gewicht verliehen werden soll. Beispielsweise kann die Wartezeit für den Nachzündimpuls der Verzögerungseinrichtung 15, die Zwischenspeicher-Deaktiviereinrichtung 17, der Bewerter für Ansteuer-Referenzsignale 18 sowie die Zählgrenze der Bewertungseinrichtung 15 weitgehend frei gewählt werden.

Zu betonen ist jedoch, daß ein derartiger digitaler Aufbau der Ansteuerschaltung 2 nicht zwingend erforderlich ist. Beispielsweise kann ein diskreter Aufbau vorgesehen sein, bei dem einige Funktionsgruppen vorteilhaft auch mit analogen Schaltungsanordnungen realisiert sein können, beispielsweise mit RC-Gliedern oder Monoflops. Ebenso ist darauf hinzuweisen, daß für das erfindungsgemäße Verfahren nicht alle Funktionsblöcke gemäß Figur 1 zwingend notwendig sind. So kann beispielsweise vorgesehen sein, die Einrichtung 14 zur Erzeugung von Ansteuer-Wiederholsignalen mit der zugehörigen Verzögerungseinrichtung 15 nicht vorzusehen. Weiterhin kann vorgesehen sein, zusätzliche Funktionseinheiten in die Ansteuerschaltung 2 aufzunehmen, sofern die Detektion weiterer Fehlerzustände wünschenswert ist. Wesentlich ist, daß Fehlerzustände erkannt und daß Fehlersignale mit Referenzsignalen verglichen werden, wobei das erzeugte Bewertungssignal erst oberhalb eines bestimmten Werts zur Abschaltung der Ansteuerschaltung 2 führt. Innerhalb dieses Rahmens können einzelne Funktionsgruppen, die gemäß Figur 1 beschrieben sind, auch anders realisiert sein. So kann beispielsweise die Einrichtung 9 als Taktgenerator arbeiten, wobei die von ihr angesteuerten Funktionsgruppen 5, 17 und 18 die Taktsignale weiterverarbeiten müssen. Die Funktionsgruppen 17 und 18 weisen dann andere Zählverhältnisse auf. Die Einrichtung 5 zur Erzeugung von Ansteuersignalen ist in diesem Fall mit der Einrichtung 9 zur Erzeugung von Ansteuer-Referenzsignalen zusammengefaßt, und die zusammengefaßte Einrichtung zur Erzeugung von Ansteuersignalen ist von der Bewertungseinrichtung 11 abschaltbar.

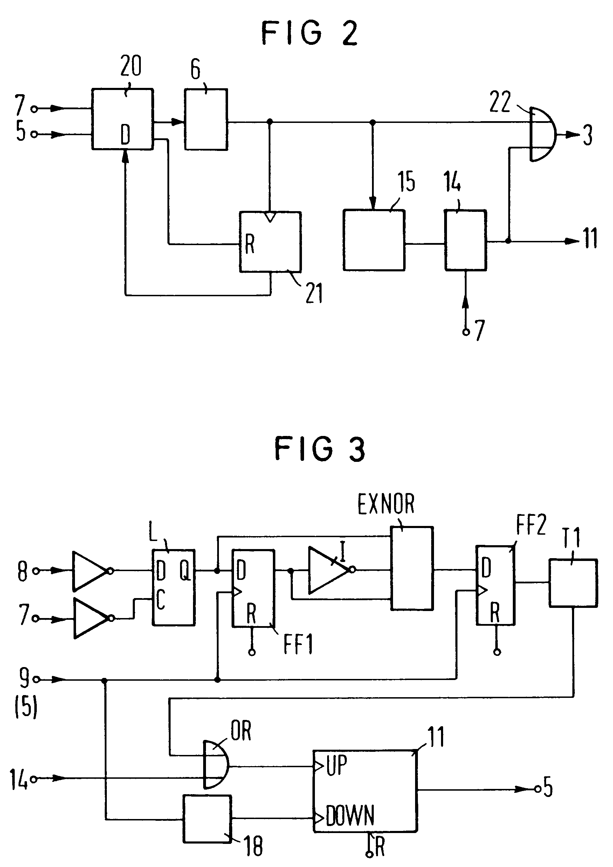

Figur 2 zeigt eine Möglichkeit zur Realisierung der gemäß Figur 1 beschriebenen Speicherfunktion mit Speicher-Deaktivierung und zur Erzeugung von Ansteuer-Wiederholsignalen. Ein Zwischenspeicher 20 wird von einem Überwachungsausgang des Detektors 7 und von einem Ausgang der Einrichtung 5 zur Überwachung von Ansteuersignalen bzw. der Einrichtung 9 zur Erzeugung von Ansteuer-Referenzsignalen gesteuert. Als Ausgang des Detektors 7 kann entweder der Ausgang 71, der den durchgeschalteten Zustand des Triacs detektiert oder aber der Nulldurchgangs-Sensorausgang 74 dienen. Dem Zwischenspeicher nachgeschaltet ist die Ansteuersignal-Ausgangsstufe 6, deren Ausgang zu einem ODER-Glied 22 führt. Der Ausgang der Ansteuersignal-Ausgangsstufe taktet einen Zähler 21, der ausgangsseitig bei einem bestimmten Zählerstand den Disable-Eingang D des Zwischenspeichers 20 aktiviert und damit den Speicherbetrieb unterbricht. Dieser Zustand führt zu einem Reset-Signal, das am Reset-Eingang R den Zähler 21 zurücksetzt. Zwischenspeicher 20 und Ansteuersignal-Ausgangsstufe sowie Zähler 21 sind zweckmäßigerweise durch Flipflops, beispielsweise D-Flipflops realisiert.

Der Ausgang der Ausgangsstufe 6 führt weiterhin zu einer Verzögerungseinrichtung 15, der ausgangsseitig eine Einrichtung 14 zur Erzeugung von Ansteuer-Wiederholsignalen nachgeschaltet ist. Die Einrichtung 15 kann beispielsweise ein Monoflop enthalten oder aber einen digitalen Zähler, für den dann ein Reset-Signal vorgesehen sein muß. Die Einrichtung 14 ist ähnlich wie die Ausgangsstufe 6 aufgebaut und wird vom Detektor 7 gesteuert. Ausgangsseitig führt die Einrichtung 14 zum ODER-Glied 22, das ausgangsseitig zum Durchschalteingang des Triacs 3 führt. Der Ausgang der Einrichtung 14 ist weiterhin mit einem Fehlereingang der Bewertungseinrichtung 11 verbunden.

Figur 3 stellt die Halbwellenvergleichseinrichtung 13 sowie die Bewertungseinrichtung 11 und den Bewerter für Ansteuer-Referenzsignale 18 dar. Ein Ausgang der Netz-Synchronisiereinrichtung 8, der eine digitale Netzinformation enthält, beispielsweise der Ausgang des Polaritätsdetektors 10, bildet einen Eingang eines Latch L. Ein anderer Eingang des Latch L ist mit einem Überwachungsausgang des Detektors 7 verbunden, im Ausführungsbeispiel mit dem Ausgang 71, der ein Durchzünden des Triacs 3 anzeigt. Dem Latch ist ausgangsseitig ein Flipflop FF1 nachgeschaltet, das von der Einrichtung 5 zur Erzeugung von Ansteuersignalen bzw. der Einrichtung 9 zur Erzeugung von Ansteuer-Referenzsignalen getaktet wird und einen Rücksetzeingang R enthält. Der Ausgang des Flipflops FF1 ist einerseits direkt und andererseits über einen Inverter I mit einem Exklusiv-NOR-Glied EXNOR verbunden. Ein dritter Eingang dieses Gatters ist mit dem Ausgang Q des Latch L direkt verbunden. Ausgangsseitig führt das Exklusiv-NOR-Gatter auf ein weiteres Flipflop FF2, das ebenfalls von der Einrichtung 5 bzw. 9 getaktet wird und einen Rücksetzeingang enthält. Der Ausgang von FF2 ist mit einem ODER-Glied OR, gegebenenfalls unter Zwischenschaltung eines Teilers T1 verbunden. Der andere Eingang des ODER-Glieds OR ist mit der Einrichtung zur Erzeugung von Ansteuer-Wiederholsignalen 14 verbunden. Ausgangsseitig steuert das ODER-Glied OR den Aufwärts-Zähleingang eines Zählers 11, dessen Abwärts-Zähleingang von der Einrichtung 5 bzw. 9 mit Hilfe von Ansteuersignalen unter Zwischenschaltung eines Teilers bzw. Bewerters 18 für Ansteuersignale gesteuert wird. Die Bewertungseinrichtung 11 enthält einen Rücksetzeingang R. Ausgangsseitig erzeugt der Fehlerzähler 11 ein Stopsignal zur Abschaltung der Ansteuerschaltung 2. Weitere Möglichkeiten zur Realisierung von Fehlerdetektoren sind den nicht vorveröffentlichten Patentanmeldung DE-Patentanmeldungen P 40 12 255 sowie P 40 12 254 zu entnehmen.

## Patentansprüche

1. Verfahren zum Schutz eines nach dem Phasenanschnittprinzip gesteuerten elektrischen Verbrauchers (4), bei dem eine Steuervorrichtung (1) mit einer Ansteuerschaltung (2) und einem mittels Ansteuersignalen schaltbaren Halbleiterschaltelement (3) vorgesehen ist und bei dem die Ansteuerschaltung (2) mit Hilfe einer Netz-Synchronisiereinrichtung (8, 9, 10) Referenzsignale erzeugt,
**gekennzeichnet** durch folgende Schritte:
- die Ansteuerschaltung (2) erzeugt in Abhängigkeit von einem Durchschalten des Halbleiterschaltelements (3) nach einem von ihr gelieferten Ansteuersignal Überwachungssignale,
- aus den Überwachungssignalen werden bei Vorliegen mindestens eines gegebenen Fehlerkriteriums Fehlersignale abgeleitet,
- Ansteuer-Referenzsignale werden mit den Fehlersignalen in einer Bewertungseinrichtung (11) verglichen und ein Bewertungssignal erzeugt,
- die Ansteuerschaltung (2) schaltet ab, wenn das Bewertungssignal einen vorgegebenen Wert erreicht.

2. Verfahren nach Anspruch 1,
**dadurch gekennzeichnet,**
daß ein Fehlschalt-Überwachungssignal nach einem Ansteuersignal das Nichtdurchschalten des Halbleiterschaltelementes (3) feststellt und danach mindestens ein Ansteuer-Wiederholsignal und ein Fehlschalt-Fehlersignal erzeugt werden.

3. Verfahren nach Anspruch 2,
**dadurch gekennzeichnet,**
daß das Ansteuer-Wiederholsignal und das Fehlschalt-Fehlersignal mit vorgebbarer Zeitverzögerung nach dem Ansteuersignal erzeugt werden.

4. Verfahren nach Anspruch 1,
**dadurch gekennzeichnet,**
daß ein Durchschalt-Überwachungssignal nach einem Ansteuersignal das Durchschalten des Halbleiterschaltelements (3) feststellt,
daß das Durchschalt-Überwachungssignal in einer Halbwellenvergleichseinrichtung (13) mit einem Polaritäts-Referenzsignal, das der Polarität einer an dem Halbleiterschaltelement (3) anliegenden Spannung zugeordnet ist, verglichen wird und daß bei Erfüllung eines für den Vergleich vorgegebenen Fehlerkriteriums ein Halbwellen-Fehlersignal erzeugt wird.

5. Verfahren nach Anspruch 4,
**dadurch gekennzeichnet,**
daß das Halbwellen-Fehlersignal erzeugt wird, wenn bei nicht verändertem Polaritäts-Referenzsignal kein oder zwei Durchschalt-Überwachungssignale erzeugt werden.

6. Verfahren nach einem der Ansprüche 1 bis 5,
**dadurch gekennzeichnet,**
daß digitale Fehlersignale und digitale Ansteuer-Referenzsignale vorgesehen sind, daß die digitalen Fehlersignale einen Fehlerzähler als Bewertungseinrichtung (11) inkrementieren und die digitalen Ansteuer-Referenzsignale den Fehlerzähler dekrementieren und daß das Bewertungssignal dem Fehlerzählerstand entspricht.

7. Verfahren nach einem der Ansprüche 1 bis 6,
**dadurch gekennzeichnet,**
daß die Ansteuersignale der Ansteuerschaltung (2) zwischengespeichert werden, solange das Halbleiterschaltelement (3) durchgeschaltet ist.

8. Verfahren nach Anspruch 8,
**dadurch gekennzeichnet,**
daß die Zwischenspeicherung der Ansteuersignale zeitweilig aufhebbar ist.

9. Anordnung zur Durchführung des Verfahrens nach einem der vorhergehenden Ansprüche mit einer Ansteuerschaltung (2), die eine Einrichtung zur Erzeugung von Ansteuersignalen (5) mit einer nachgeschalteten Ansteuersignal-Ausgangsstufe (6) zur Ansteuerung des Halbleiterschaltelements (3) enthält,
**dadurch gekennzeichnet,**
daß die Ansteuerschaltung (2) einen Detektor (7) zur Ansteuerung der Netz-Synchronisiereinrichtung (8) und zur Erzeugung von Überwachungssignalen in Abhängigkeit von einem Durchschalten des Halbleiterschaltelements (3) enthält,
daß die Netz-Synchronisiereinrichtung (8) eine Einrichtung zur Erzeugung von Ansteuer-Referenzsignalen (9) enthält, die mit einer Bewertungseinrichtung (11) verbunden ist,
daß der Detektor (7) über eine Fehlerdetektoreinrichtung (12) mit der Bewertungseinrichtung (11) verbunden ist und
daß Ausgänge der Bewertungseinrichtung (11) sowie der Netz-Synchronisiereinrichtung (8) mit der Einrichtung zur Erzeugung von Ansteuersignalen (5) verbunden sind.

10. Anordnung nach Anspruch 9,
**dadurch gekennzeichnet,**
daß die Netz-Synchronisiereinrichtung (8) einen Polaritätsdetektor (10) zur Erzeugung eines Polaritäts-Referenzsignals enthält, das der Polarität einer an dem Halbleiterschaltelement (3) anliegenden Spannung zugeordnet ist,
daß eine Halbwellenvergleichseinrichtung (13) eingangsseitig mit einem Durchschalt-Überwachungssignalausgang (71) des Detektors (7) und mit dem Polaritätsdetektor (10, 101) sowie ausgangsseitig mit der Bewertungseinrichtung (11) verbunden ist.

11. Anordnung nach Anspruch 9 oder 10,
**dadurch gekennzeichnet,**
daß eine Einrichtung zur Erzeugung von Ansteuer-Wiederholsignalen (14) zwischen einen Fehlschalt-Überwachungssignalausgang (72) des Detektors (7) und die Bewertungseinrichtung (11) sowie die Ansteuersignal-Ausgangsstufe (6) geschaltet ist.

12. Anordnung nach Anspruch 11,
**dadurch gekennzeichnet,**
daß eine Verzögerungseinrichtung (15) vom Ausgang der Ansteuersignal-Ausgangsstufe (6) auf einen Eingang der Einrichtung zur Erzeugung von Ansteuer-Wiederholsignalen (14) geschaltet ist.

13. Anordnung nach einem der Ansprüche 9 bis 12,
**dadurch gekennzeichnet,**
daß ein Zwischenspeicher (16) zur Zwischenspeicherung von Ansteuersignalen vorgesehen ist, der mit einem Sensorausgang für einen Stromnulldurchgang (74) des Halbleiterschaltelements (3) verbunden ist.

14. Anordnung nach Anspruch 13,
**dadurch gekennzeichnet,**
daß der Zwischenspeicher (16) in vorgebbaren Zeitabständen von einer Zwischenspeicher-Deaktiviereinrichtung (17) deaktivierbar ist.

15. Anordnung nach einem der Ansprüche 9 bis 14,
**gekennzeichnet** durch zumindest teilweise digitaler Ausführung.

## Claims

1. Method for protecting an electrical load (4) controlled in accordance with the phase-gating principle, in which provision is made of a control device (1) having a drive circuit (2) and a semiconductor switching element (3) which can be switched by means of drive signals, and in which the drive circuit (2) generates reference signals with the aid of a mains synchronization device (8, 9, 10), characterized by the following steps:
- the drive circuit (2) generates monitoring signals as a function of switching of the semiconductor switching element (3) subsequent to a drive signal supplied by it,
- in the event of the occurrence of at least one given error criterion, error signals are derived from the monitoring signals,
- drive reference signals are compared with the error signals in an evaluation device (11), and an evaluation signal is generated, and
- the drive circuit (2) switches off when the evaluation signal reaches a prescribed value.

2. Method according to Claim 1, characterized in that subsequent to a drive signal a maloperation monitoring signal determines the non-switching of the semiconductor switching element (3), and thereafter at least one drive repeat signal and one maloperation error signal are generated.

3. Method according to Claim 2, characterized in that the drive repeat signal and the maloperation error signal are generated with a prescribable time delay subsequent to the drive signal.

4. Method according to Claim 1, characterized in that subsequent to a drive signal a switching monitoring signal determines the switching of the semiconductor switching element (3), in that the switching monitoring signal is compared in a half-wave comparator (13) with a polarity reference signal which is assigned to the polarity of a voltage applied across the semiconductor switching element (3), and in that a half-wave error signal is generated in the event of fulfilment of an error criterion prescribed for the comparison.

5. Method according to Claim 4, characterized in that the half-wave error signal is generated if in the event of an unchanged polarity reference signal no or two switching monitoring signals are generated.

6. Method according to one of Claims 1 to 5, characterized in that digital error signals and digital drive reference signals are provided, in that the digital error signals increment an error counter as evaluation device (11) and the digital drive reference signals decrement the error counter, and in that the evaluation signal corresponds to the reading of the error counter.

7. Method according to one of Claims 1 to 6, characterized in that the drive signals of the drive circuit (2) are temporarily stored as long as the semiconductor switching element (3) is switched.

8. Method according to Claim 7, characterized in that the temporary storage of the drive signals can be temporarily cancelled.

9. Arrangement for carrying out the method according to one of the preceding claims, having a drive circuit (2) which includes a device for generating drive signals (5) with a downstream drive signal output stage (6) for driving the semiconductor switching element (3), characterized in that the drive circuit (2) includes a detector (7) for driving the mains synchronization device (8) and for generating monitoring signals as a function of switching of the semiconductor switching element (3), in that the mains synchronization device (8) includes a device for generating drive reference signals (9) which is connected to an evaluation device (11), in that the detector (7) is connected to the evaluation device (11) via an error detecting device (12), and in that outputs of the evaluation device (11) and of the mains synchronization device (8) are connected to the device for generating drive signals (5).

10. Arrangement according to Claim 9, characterized in that the mains synchronization device (8) includes a polarity detector (10) for generating a polarity reference signal which is assigned to the polarity of a voltage applied across the semiconductor switching element (3), and in that a half-wave comparator (13) is connected on the input side to a switching monitoring signal output (71) of the detector (7) and to the polarity detector (10, 101), as well as on the output side to the evaluation device (11).

11. Arrangement according to Claim 9 or 10, characterized in that a device for generating drive repeat signals (14) is connected between a maloperation monitoring signal output (72) of the detector (7) and the evaluation device (11) as well as the drive signal output stage (6).

12. Arrangement according to Claim 11, characterized in that a delay device (15) is switched from the output of the drive signal output stage (6) to an input of the device for generating drive repeat signals (14).

13. Arrangement according to one of Claims 9 to 12, characterized in that for the purpose of temporary storage of drive signals provision is made of a buffer (16) which is connected to a sensor output for a current zero (74) of the semiconductor switching element (3).

14. Arrangement according to Claim 13, characterized in that the buffer (16) can be deactivated at prescribable time intervals by a buffer deactivation device (17).

15. Arrangement according to one of Claims 9 to 14, characterized by an at least partially digital design.

## Revendications

1. Procédé pour protéger un appareil d'utilisation électrique (4) commandé selon le principe à découpage de phase, selon lequel il est prévu un dispositif de commande (1) comportant un circuit de commande (2) et un élément de commutation à semiconducteurs (3) pouvant être commuté au moyen de signaux de commande, et selon lequel le circuit de commande (2) produit des signaux de référence, à l'aide d'un dispositif (8,9,10) de synchronisation du réseau,
caractérisé par les étapes suivantes :
- le circuit de commande (2) produit, en fonction d'une mise à l'état passant de l'élément de commutation à semiconducteurs (3), des signaux de contrôle, en fonction d'un signal de commande délivré par ce circuit de commande,
- dans le cas de la présence d'au moins un critère de défaut établi, des signaux de défaut sont produits à partir des signaux de contrôle,
- des signaux de référence de commande sont comparés aux signaux de défaut dans un dispositif d'évaluation (11) et un signal d'évaluation est produit,
- le circuit de commande (2) se débranche lorsque le signal d'évaluation atteint une valeur prédéterminée.

2. Procédé suivant la revendication 1, caractérisé par le fait qu'après un signal de commande, un signal de contrôle de connexion défectueuse détermine la non mise à l'état passant de l'élément de commutation à semiconducteurs (3) et au moins un signal de répétition de commande et un signal de défaut dû à une connexion défectueuse sont produits ensuite.

3. Procédé suivant la revendication 2, caractérisé par le fait que le signal de répétition et de commande et le signal de défaut dû à une connexion défectueuse sont produits avec un retard pouvant être prédéterminé, après le signal de commande.

4. Procédé suivant la revendication 1, caractérisé par le fait qu'un signal de contrôle de mise à l'état passant établit, après un signal de commande, la mise à l'état passant de l'élément de commutation à semiconducteurs,
que le signal de contrôle de mise à l'état passant est comparé, dans un dispositif comparateur d'alternances (13), à un signal de référence de polarité, qui est associé à la polarité d'une tension appliquée à l'élément de commutation à semiconducteurs (30), et qu'un signal d'erreur d'alternance est produit lorsqu'un critère d'erreur prédéterminé pour la comparaison est satisfait.

5. Procédé suivant la revendication 4, caractérisé par le fait que le signal d'erreur d'alternance est produit lorsque, alors que le signal de référence de polarité n'est pas modifié, aucun signal de contrôle de mise à l'état passant n'est produit ou deux signaux de contrôle de mise à l'état passant sont produits.

6. Procédé suivant la revendication 1 à 5, caractérisé par le fait qu'il est prévu des signaux numériques d'erreur et des signaux numériques de référence de commande, que les signaux numériques d'erreur incrémentent un compteur d'erreurs utilisé comme dispositif d'évaluation (11) et que les signaux numériques de référence de commande décrémentent le compteur d'erreurs et que le signal d'évaluation correspond à l'état du compteur d'erreurs.

7. Procédé suivant l'une des revendications 1 à 6, caractérisé par le fait que les signaux de commande du circuit de commande (2) sont mémorisés temporairement tant que l'élément de commutation à semiconducteurs (3) est placé à l'état passant.

8. Procédé suivant la revendication 7, caractérisé par le fait que la mémorisation intermédiaire des signaux de commande peut être supprimée temporairement.

9. Dispositif pour la mise en oeuvre du procédé suivant l'une des revendications précédentes, comportant un circuit de commande (2) qui comporte un dispositif pour produire des signaux de commande (5) et en aval duquel est branché un étage (6) de sortie du signal de commande pour la commande de l'élément de commutation à semiconducteurs (3), caractérisé par le fait
que le circuit de commande (2) comporte un détecteur (7) servant à commander le dispositif (8) de synchronisation du réseau et à produire des signaux de contrôle en fonction d'une mise à l'état passant de l'élément de commutation à semiconducteurs (3),
que le dispositif (8) de synchronisation du réseau comporte un dispositif pour produire des signaux de référence de commande (9) et qui est relié à un dispositif d'évaluation (11),
que le détecteur (7) est relié par l'intermédiaire d'un dispositif de détection de défaut (12) et un dispositif d'évaluation (11), et
que des sorties du dispositif d'évaluation (11) ainsi que du dispositif (8) de synchronisation du réseau sont reliés au dispositif servant à produire des signaux de commande.

10. Dispositif suivant la revendication 9, caractérisé par le fait que le dispositif (8) de synchronisation du réseau comporte un détecteur de polarisation (10) servant à produire un signal de référence de polarité, qui est associé à la polarité d'une tension appliquée à l'élément de commutation à semiconducteurs (3),
qu'un dispositif de comparaison d'alternances (13) est relié, côté entrée, à une sortie (61) du signal de contrôle de mise à l'état passant du détecteur (7) et au détecteur de polarité (10,101) ainsi que, côté sortie, au dispositif d'évaluation (11).

11. Dispositif suivant la revendication 9 ou 10, caractérisé par le fait qu'un dispositif servant à produire des signaux de répétition de commande (14) est branché entre une sortie (72) du signal de contrôle de connexion défectueuse du détecteur (7) et le dispositif d'évaluation (11) ainsi que l'étage (6) de sortie du signal de commande.

12. Dispositif suivant la revendication 11, caractérisé par le fait qu'un dispositif de retardement (15) est branché entre la sortie de l'étage (6) de sortie du signal de commande et une entrée du dispositif servant à produire des signaux de répétition de commande (14).

13. Dispositif suivant l'une des revendications 9 à 12, caractérisé par le fait qu'il est prévu une mémoire intermédiaire (16) servant à mémoriser temporairement des signaux de commande et qui est reliée à une sortie du détecteur servant à détecter le passage par zéro (74) du courant de l'élément de commutation à semiconducteurs (3).

14. Dispositif suivant la revendication 13, caractérisé par le fait que la mémoire intermédiaire (16) peut être désactivée, à des intervalles de temps pouvant être prédéterminés, par un dispositif (17) de désactivation de la mémoire intermédiaire.

15. Dispositif suivant l'une des revendications 9 à 14, caractérisé par une réalisation au moins partiellement numérique.
